# EUROPEAN PATENT SPECIFICATION

(11) **EP 0 650 857 B1**
(45) Date of publication and mention of the grant of the patent: **15.04.1998**
(21) Application number: 94116877.5
(22) Date of filing: 26.10.1994
(51) Int. Cl.: B60D 1/02, B60D 1/48

(54) **A tow hitch for vehicles, particularly agricultural tractors and the like**
Anhängevorrichtung für Fahrzeuge, insbesondere für landwirtschaftliche Schlepper und dergleichen
Attelage pour véhicules, en particulier pour tracteurs agricoles et autres

(30) Priority: 29.10.1993 IT BO930432
(43) Date of publication of application: 03.05.1995
(73) Proprietor: CBM S.p.A., 41100 Modena (IT)
(72) Inventor: Cornia, Enrico Maria, I-41100 Modena (IT)
(74) Representative: Provvisionato, Paolo

(56) References cited:
- DE-A- 2 047 978
- DE-A- 3 049 456
- DE-U- 6 910 130
- FR-A- 1 334 550
- FR-A- 2 452 394

## Description

The present invention relates to a tow hitch for vehicles, particularly agricultural tractors and the like.

The invention has been developed particularly, but not exclusively, with regard to a rear tow hitch for coupling with a towing eye of a trailer. This tow hitch has to be mounted on the towing vehicle in a manner such that it is clamped axially relative to a principal towing axis substantially parallel to the direction of travel of the vehicle. At the same time, the hitch must be able to rotate about the principal towing axis when it is stressed by a torque transmitted by the towing eye as a result of the trailer pivoting about the towing axis, relative to the tractor.

The hitch also has a clamping device which allows the aforesaid rotation about the principal rotation axis only when the torque exceeds a predetermined value.

There are known tow hitches of the aforementioned type in which the aforesaid rotatable coupling is clamped axially relative to the principal towing axis by means of components which are welded to the shank or to the body of the hitch and form surfaces for striking or abutting corresponding shoulder surfaces of a support of the hitch mounted on the rear portion of the tractor.

These known hitches have the disadvantage that they require the welds to be formed accurately and the quality of the welds formed to be checked rigorously in order to ensure that the tow hitch is very reliable in continuous use even in difficult conditions as is required, after all, by the current standards. As is well known, the checking of the quality of welded joints requires a considerable expenditure of time, involves high costs, and leads to low productivity owing to the high percentage of products which are rejected because they do not conform to the prescribed quality requirements.

Moreover, the production quality welds requires the use of sophisticated and expensive automatic tools or highly skilled personnel, which helps to increase the final cost of the finished tow hitch.

Document DE-A-30 49 456, which shows the subject-matter of the preamble of claim 1, discloses a tow hitch comprising a rotatable hollow main body which can rotate along a towing axis when a certain torque applied to the tow hitch is exceeded. The hollow main body receives a removable element which is coupled to an abutment element which prevents the main body of the tow hitch from moving along the towing axis.

The object of the present invention is to provide a tow hitch of the aforementioned type which does not have the disadvantages mentioned above and which, in particular, is easy and cheap to produce and very reliable in use, reducing the need to use sophisticated tools or skilled personnel to produce the tow hitch.

In order to achieve this object, the present invention relates to a tow hitch having the characteristics indicated in Claim 1 below.

An advantage of a hitch of this type is that productivity is high by virtue of the fact that the tolerances and the quality of the production process can be controlled easily by normal control procedures and by virtue of the fact that the specific design techniques can easily be reproduced by normal production tools, particularly as regards the dimensional and geometrical tolerances.

A further advantage of the present invention consists of the fact that the tow hitch is manufactured with a limited number of components, facilitating its assembly even by unskilled personnel with consequent advantages in terms of production times and costs.

Another advantage of the present invention consists of the fact that the tow hitch is very reliable in the long term even under prolonged conditions of heavy use, reducing the need for overhaul and maintenance during operation.

A further advantage of the present invention is that the tow-hitch unit can be dismantled into its component parts easily and quickly when required for normal maintenance or for the easy replacement of damaged or worn components.

According to another characteristic of the invention, the tow hitch comprises a device for limiting the rotation of the hitch about the principal towing axis, the device allowing the hitch body to rotate freely about this axis only when a predetermined torque is exceeded. The characteristics of this device are indicated in Claim 7 below.

The device can be produced easily and conveniently and is very reliable in the long term even in difficult conditions of use and, moreover, is integrated in the structure of the tow hitch without increasing its size in comparison with a hitch without a limiting device.

Further characteristics and advantages of the present invention will become clear from the detailed description which follows with reference to the appended drawings, which are given by way of non-limiting example, and in which:
Figure 1 is a longitudinal section of the tow hitch according to the present invention, and
Figure 2 is an exploded perspective view of a particular assembly of the hitch of Figure 1.

With reference now to the drawings, a tow hitch, generally indicated 1, particularly for agricultural tractors, is connected as described further below, to a bent U-shaped support 2, the lateral arms 2a of which are connected firmly, in generally known manner, to the rear structure 3 of a towing vehicle.

The tow hitch 1 comprises a unitary fork-shaped body 4 which is produced by casting and is extended by a cylindrical shank 5 which is joined to the fork 4 at 6. The prongs 4a of the fork 4 have two coaxial holes 7 of circular cross-section with an axis perpendicular to the horizontal working plane of the towing vehicle, the holes 7 housing a pin 8 which, in use, is intended to engage the hole in the eye of the trailer (not shown in the drawing) after the latter has been brought close to the towing vehicle until the eye is inserted between the prongs 4a of the fork 4.

The pin 8, of known type, is stopped at the top in abutment against the upper prong of the fork 4 by a shoulder 8a and has a handle 9 for the upward manual removal of the pin from its seat in the fork. The pin 8 is stopped longitudinally at the bottom by a resilient "R"-shaped safety pin 10 inserted in a transverse hole in the pin 8.

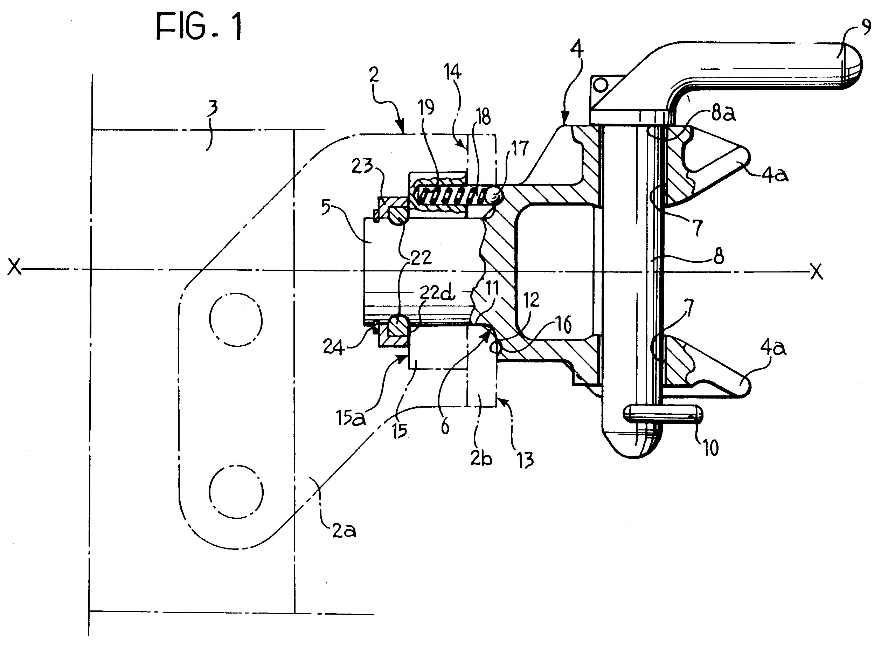

The central wall 2b of the "U"-shaped support 2 of the tow hitch is perpendicular to the principal towing axis, indicated X-X in Figure 1 and, in a substantially central portion, has a circular hole 11 in which the shank 5 of the tow hitch 1 is inserted. The mouth 11a of the circular hole 11 is chamfered to prevent interference with the junction 6 of the hitch so that an annular levelled surface 12 on the body of the hitch abuts the surface 13 of the central wall 2b which faces the fork 4 (on the right-hand side in Figure 1).

A bush 15, which has an inside diameter substantially equal to the diameter of the circular hole 11 and through which the shank 5 of the tow hitch extends, is connected rigidly to the surface 14 of the "U"-shaped support 2b which faces the rear portion of the towing vehicle (on the left-hand side in Figure 1).

In the surface of the levelled surface 12 there is a series of blind holes 16, preferably four holes, spaced evenly along the annular surface for housing a ball 17 which is urged against the levelled surface 12 by a compression spring 18 housed in a blind hole 19 in the bush 15 and in the central wall 2b of the support 2 and coaxial with the blind holes 16.

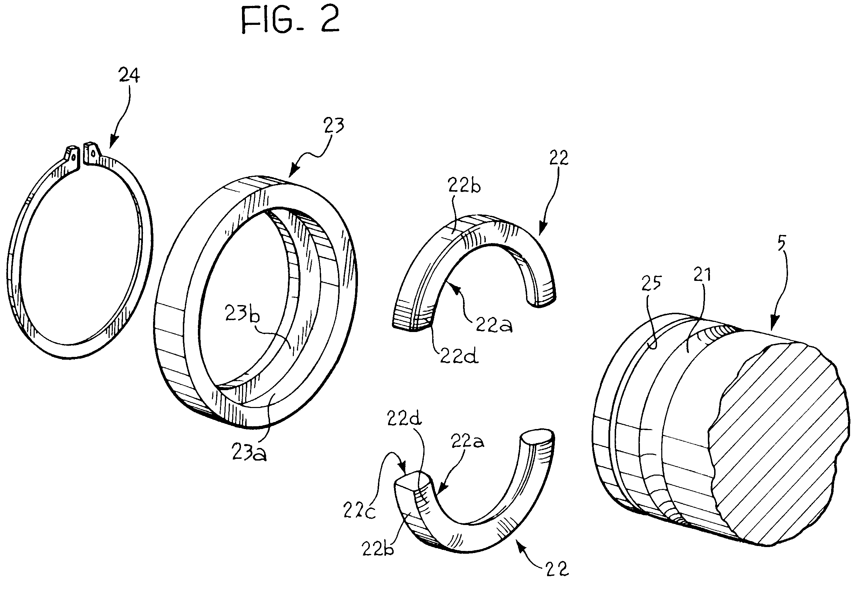

With particular reference to Figure 2, a peripheral groove 21 with a semicircular cross-section is formed on the end portion of the shank 5 of the tow-hitch body and houses the corresponding semi-circular cross-sectioned portions 22a of at least two ring segments 22 of combined semicircular-rectangular cross-section. There are preferably three ring segments 22 or, as shown in Figure 2, two ring segments 22, which together make up a ring structure completely surrounding the shank 5. A retaining ring 23 is mounted on the shank 5 so as to clamp the assembly of the two half-rings 22 in the position shown in Figure 1.

More precisely, the retaining ring 23 comprises an internal cylindrical wall 23a, which surrounds the external cylindrical surfaces 22b of the two half-rings 22, and an annular base wall 23b abutting the annular lateral surfaces 22c of the half-rings 22 which project relative to the peripheral curved surface of the shank 5. The annular lateral surfaces 22d of the half-rings 22 which face away from the base wall 23b abut the base wall 15a of the bush 15.

A "Seeger" safety spring ring 24 is inserted in a peripheral recess 25 on the shank 5 to lock the retaining ring 23 in the position indicated in Figure 1.

When the tow hitch of the present invention is in use, the eye of a trailer is connected to the fork 4 by means of the pin 8 in known manner. The pulling force exerted on the hitch along the longitudinal axis X-X of Figure 1 brings about a thrust on the half-rings 22, the radial component of which is counterbalanced by the encircling effect of the retaining ring 23.

The compression exerted by the spring 18 on the ball 17 which is partially housed in one of the blind holes 16 provides a resisting torque which prevents the tow-hitch body from rotating about the axis X-X. When the tow hitch receives a torsional force greater than the compression loading of the spring 18 by means of the connection to the trailer, however, the ball 17 overcomes the action of the spring 18 and comes out of the blind hole 16 in which it is housed, allowing the tow-hitch body to rotate about the axis X-X.

If, in the rest condition, the ball 17 is not housed in any of the blind holes 16 and a torque is applied to the hitch with an intensity below the predetermined value for which the free rotation of the hitch about the axis X-X is permitted, the hitch body rotates until the ball 17 is disposed opposite the nearest blind hole 16 and engages it.

In the preferred embodiment, there are four blind holes 16 arranged at 90° intervals around the annular levelled surface 12. When the condition explained above arises, the body of the hitch thus rotates through a maximum of 90° until it is locked in a certain angular position. Naturally, this principle can easily be extended to include a different number and different positions of the blind holes 16 in the levelled surface 12 to achieve different conditions for the locking of the rotation of the hitch about the axis X-X.

The provision of a single ball 17 and a single spring 18 is particularly advantageous since, when, during the assembly stage or the checking of the finished product, the shank 5 of the hitch is already inserted in the circular hole 11 and it is no longer possible to check the presence of the ball 17 visually, the presence or absence of the ball 17 and the spring 18 and, consequently, the presence and effectiveness of the locking device of the tow hitch, can immediately be checked simply by the manual rotation of the hitch about the axis X-X.

Naturally, the principle of the invention remaining the same, the forms of embodiment and details of construction may he varied widely with respect to those described and illustrated, without thereby departing from the present invention as defined in the appended claims.

## Claims

1. A tow hitch for vehicles, particularly agricultural tractors and the like, comprising a main body (4, 5) which is mounted for rotating relative to a towing axis (X-X) on a support element (2b, 15) connected to the towing vehicle, at least two abutment surfaces (12, 22d) associated with the main body (4, 5) preventing it from moving along the towing axis (X-X) relative to the support element (2b, 15), at least one (22d) of the abutment surfaces being formed on an abutment element (22) which is mounted removably on the main body (4, 5) of the tow hitch, characterized in that the main body (4, 5) of the tow hitch comprises an at least partially cylindrical shank (5), the abutment element (22) including at least two ring segments (22) mounted at least partially in a peripheral groove (21) formed on the shank (5), and retaining means (23, 24) clamping the ring segments (22) on the shank.

2. A tow hitch according to Claim 1, characterized in that the other abutment surface (12) is formed integrally on the main body (4, 5) of the tow hitch.

3. A tow hitch according to Claim 1, characterized in that the ring segments (22) have combined semicircular-rectangular cross-sections, the semicircular portion (22a) of the cross-sections being housed in corresponding semicircular portions of the peripheral groove (21).

4. A tow hitch according to Claim 1, characterized in that the retaining means comprise a retaining ring (23) including an internal cylindrical wall (23b) which can clamp the ring segments (22) peripherally.

5. A tow hitch according to Claim 4, characterized in that a resilient retaining ring (24) is provided for locking the retaining ring (23) on the shank (5) axially.

6. A tow hitch according to Claim 1, characterized in that torque-limiting means (16, 17, 18) are associated with the tow hitch to allow the main body (4, 5) to rotate relative to the support element (2b, 15) when a predetermined torque applied to the tow hitch on the towing axis (X-X) is exceeded.

7. A tow hitch according to Claim 6, characterized in that the torque-limiting means comprise at least one ball (17) which is intended, in the locked condition, to be partially housed in a corresponding cavity (16) in the main body (4, 5) of the hitch, the ball (17) being held in the cavity (16) by the action of resilient means (18), and the exceeding of a predetermined torque causing the ball (17) to come out of the cavity (16), opposing the action of the resilient means (18).

8. A tow hitch according to Claim 7, characterized in that the resilient means (18) comprise helical springs housed in holes (19) in the support element (2b, 15).

## Patentansprüche

1. Anhängevorrichtung für Fahrzeuge, insbesondere für landwirtschaftliche Schlepper und dergleichen, mit einem Hauptteil (4,5), das an einem mit dem Zugfahrzeug verbundenen Verstärkungselement (2b, 15) relativ zu einer Zugachse (X-X) drehbar montiert ist, zumindest zwei dem Hauptteil (4,5) zugeordneten Anlageflächen (12, 22d), die eine Bewegung entlang der Zugachse relativ zu dem Verstärkungselement (2b,15) verhindern, wobei zumindest eine (22d) der Anlageflächen an einem Anlageelement (22) ausgebildet ist, das abnehmbar an dem Hauptteil (4,5) der Anhängevorrichtung montiert ist, **dadurch gekennzeichnet**, daß der Hauptteil (4,5) der Anhängevorrichtung einen zumindest teilweise zylindrischen Schaft (5) aufweist, das Anlageelement (22) zumindest zwei Ringsegmente (22) beinhaltet, die zumindest teilweise in einer in dem Schaft (5) ausgebildeten umfänglichen Vertiefung (21) befestigt sind, und Halteelemente (23, 24) vorgesehen sind, die die Ringelemente (22) auf dem Schaft festklemmen.

2. Vorrichtung nach Anspruch 1, **dadurch gekennzeichnet**, daß die andere Anlagefläche (12) vollständig an dem Hauptteil (4,5) der Anhängevorrichtung ausgebildet ist.

3. Vorrichtung nach Anspruch 1, **dadurch gekennzeichnet**, daß die Ringsegmente (22) kombinierte halbkreisförmige-rechteckige Querschnitte aufweisen und daß der halbkreisförmige Teil (22a) der Querschnitte in korrespondierenden halbkreisförmigen Teilen der umfänglichen Vertiefung (21) gelagert ist.

4. Vorrichtung nach Anspruch 1, **dadurch gekennzeichnet**, daß die Halteelemente einen Haltering (23) mit einer inneren zylindrischen Wand (23b) aufweisen, welcher die Ringsegmente (22) äußerlich umfassen kann.

5. Vorrichtung nach Anspruch 4, **dadurch gekennzeichnet**, daß ein elastischer Sprengring (24) zur axialen Festlegung des Rückhalteringes (23) auf dem Schaft (5) vorgesehen ist.

6. Vorrichtung nach Anspruch 1, **dadurch gekennzeichnet**, daß drehmomentbegrenzende Einrichtungen (16, 17, 18) mit der Anhängevorrichtung verbunden sind, um dem Hauptteil (4,5) eine Drehung relativ zu dem Verstärkungselement (2b, 15) zu erlauben, wenn ein vorbestimmtes Drehmoment, ausgeübt auf die Anhängevorrichtung um die Zugachse (X-X), überschritten wird.

7. Vorrichtung nach Anspruch 6, **dadurch gekennzeichnet**, daß die drehmomentbegrenzenden Einrichtungen zumindest eine Kugel (17) aufweisen, die in der Verriegelungsstellung teilweise in einer korrepondierenden Aushöhlung (16) des Hauptteils (4,5) der Vorrichtung gelagert ist, wobei die Kugel (17) in der Aushöhlung (16) durch die Einwirkung von Spannvorrichtungen (18) gehalten wird und das Überschreiten eines vorherbestimmten Drehmomentes die Kugel (17) aus der Aushöhlung (16) entgegen der Einwirkung der Spannvorrichtungen (18) bewegt.

8. Vorrichtung nach Anspruch 7, **dadurch gekennzeichnet**, daß die Spannvorrichtung (18) Schraubenfedern enthält, die in Löchern (19) in dem Verstärkungselement (2b, 15) angeordnet sind.

## Revendications

1. Attelage pour véhicules, en particulier des tracteurs agricoles et analogues, comprenant un corps principal (4, 5) monté à rotation par rapport à un axe d'attelage (X-X) sur un élément support (2b, 15) relié au véhicule tracteur de l'attelage, au moins deux surfaces de butée (12, 22d) associées au corps principal (4, 5) l'empêchant de se déplacer dans la direction de l'axe d'attelage (X-X) par rapport à l'élément support (2b, 15) au moins l'une (22d) des surfaces de butée étant formée sur un élément de butée (22) monté de façon désolidarisable sur le corps principal (4, 5) de l'attelage, caractérisé en ce que le corps principal (4, 5) de l'attelage comprend un fût (5) au moins partiellement cylindrique, l'élément de butée (22) comprenant au moins deux segments d'anneau (22), montés au moins partiellement dans une gorge périphérique (21) ménagée sur le fût (5), et des moyens de retenue (23, 24), assurant le serrage des éléments d'anneau (22) sur le fût.

2. Un attelage selon la revendication 1, caractérisé en ce que l'autre surface de butée (12) est formée d'un seul tenant sur le corps principal (4, 5) de l'attelage.

3. Un attelage selon la revendication 1, caractérisé en ce que les segments d'anneau (22) ont des sections transversales rectangulaires-semi-circulaires combinées, la partie semi-circulaire (22a) des section transversales étant logée dans des parties semi-circulaires correspondantes appartenant à la gorge périphérique (21).

4. Un attelage selon la revendication 1, caractérisé en ce que les moyens de retenue comprennent un anneau de retenue (23) comprenant une paroi cylindrique interne (23b) pouvant assurer le serrage périphérique des segments d'anneau (22).

5. Un attelage selon la revendication 4, caractérisé en ce qu'un anneau de retenue élastique (24) est prévu pour verrouiller axialement l'anneau de retenue (23) sur la tige (5).

6. Un attelage selon la revendication 1, caractérisé en ce que des moyens de limitation de couple (16, 17, 18) sont associés à l'attelage afin de permettre au corps principal (4, 5) de tourner par rapport à l'élément support (2b, 15) lorsqu'un couple prédéterminé, appliqué à l'attelage sur l'axe d'attelage (X-X), est dépasse.

7. Un attelage selon la revendication 6, caractérisé en ce que les moyens de limitation de coupe comprennent au moins une bille (17) qui est destinée, à l'état verrouillé, à être logée partiellement dans une cavité (16) correspondante, ménagée dans le corps principal (4, 5) de l'attelage, la bille (17) étant maintenue dans la cavité (16) sous l'action de moyens élastiques (18) et le dépassement d'un couple prédéterminé provoquant la sortie de la bille (17) hors de la cavité (16), à l'encontre de l'action exercée par les moyens élastiques (18).

8. Un attelage selon la revendication 7, caractérisé en ce que les moyens élastiques (18) sont constitués de ressorts hélicoïdaux logés dans des trous (19) ménagés dans l'élément support (2b, 15).
